(19) Europäisches Patentamt
European Patent Office
Office européen des brevets

(11) **EP 1 387 787 B1**

(12) **EUROPÄISCHE PATENTSCHRIFT**

(45) Veröffentlichungstag und Bekanntmachung des Hinweises auf die Patenterteilung:
**28.09.2011   Patentblatt 2011/39**

(21) Anmeldenummer: **02742693.1**

(22) Anmeldetag: **26.04.2002**

(51) Int Cl.:
**B60T 8/1755** (2006.01)

(86) Internationale Anmeldenummer:
**PCT/DE2002/001537**

(87) Internationale Veröffentlichungsnummer:
**WO 2002/090161 (14.11.2002 Gazette 2002/46)**

(54) **VERFAHREN UND SYSTEM ZUR REGELUNG DES FAHRVERHALTENS EINES FAHRZEUGS**

METHOD AND SYSTEM FOR CONTROLLING THE PERFORMANCE OF A MOTOR VEHICLE

PROCEDE ET SYSTEME POUR REGULER LE COMPORTEMENT ROUTIER D'UN VEHICULE

(84) Benannte Vertragsstaaten:
**DE FR GB**

(30) Priorität: **10.05.2001   DE 10122654**

(43) Veröffentlichungstag der Anmeldung:
**11.02.2004   Patentblatt 2004/07**

(73) Patentinhaber: **ROBERT BOSCH GMBH**
**70442 Stuttgart (DE)**

(72) Erfinder:
• **ARNDT, Dietmar**
  **88263 Horgenzell (DE)**

• **WAHL, Anja**
  **71696 Moeglingen (DE)**
• **HILLENBRAND, Stefan**
  **71696 Moeglingen (DE)**

(74) Vertreter: **Gleiss & Grosse**
**Patentanwälte Rechtsanwälte**
**Leitzstrasse 45**
**70469 Stuttgart (DE)**

(56) Entgegenhaltungen:
| | |
|---|---|
| EP-A- 0 829 401 | EP-A- 0 943 515 |
| DE-A- 19 624 795 | DE-A- 19 744 725 |
| DE-A- 19 944 333 | DE-A- 19 950 477 |

**EP 1 387 787 B1**

## Beschreibung

Die Erfindung betrifft ein verfahren zur Regelung des Fahrverhaltens eines Fahrzeugs mit den Schritten: Ermitteln von Sollwerten, die bestimmten Regelgrößen zugeordnet sind, und Messen von Kräften an Rädern des Fahrzeugs, wobei die Regelgrößen Kräfte beziehungsweise Momente sind, aus den an den Rädern des Fahrzeugs gemessenen Kräften den Sollwerten zugeordnete Istwerte berechnet werden und die ermittelten Sollwerte und die berechneten Istwerte als Eingangswerte einer Regelung verwendet werden. Die Erfindung betrifft ferner ein System zur Regelung des Fahrverhaltens eines Fahrzeugs mit Mitteln zum Ermitteln von Sollwerten, die bestimmten Regelgrößen zugeordnet sind, und Mitteln zum Messen von Kräften an Rädern des Fahrzeugs.

## Stand der Technik

Bei gattungsgemäßen Verfahren und gattungsgemäßen Systemen erfolgt die Erkennung kritischer Fahrsituationen sowie die Berechnung der Regeleingriffe im Allgemeinen anhand der folgenden gemessenen Größen:

- Giergeschwindigkeit $\dot{\psi}$
- Querbeschleunigung $a\gamma$
- Lenkwinkel am Vorderrad $\delta$
- Raddrehzahl an allen vier Rädern
- Bremsvordruck
- Fahrpedalstellung.

Ferner werden aus diesen Größe abgeleitete Größen verwendet, die beispielsweise durch Schätzung ermittelt werden. Die wichtigsten Größen für die Regelungsverfahren und die Regelungssysteme des Standes der Technik sind die gemessene Giergeschwindigkeit $\dot{\psi}$ und der mit Hilfe der anderen Größen geschätzte Schwimmwinkel $\beta$ des Fahrzeugs. Bei einer Regelung auf der Grundlage der Giergeschwindigkeit $\dot{\psi}$ wird beispielsweise eine Sollgiergeschwindigkeit mit einer Istgiergeschwindigkeit verglichen. Bei Abweichungen der Istgiergeschwindigkeit von der Sollgiergeschwindigkeit wird diese Differenz in Steuersignale für bestimmte Stellelemente umgerechnet, durch deren Betätigung sich dann die Istgiergeschwindigkeit an die Sollgiergeschwindigkeit annähert. Nachteilig an einer solchen beispielhaften Fahrdynamikregelung auf der Grundlage der Giergeschwindigkeit $\dot{\psi}$ ist allerdings, dass die Giergeschwindigkeit eine sekundäre Größe ist, ebenso wie der Schwimmwinkel $\beta$, das heißt die Regelung wirkt nicht auf die primären physikalischen Größen, die für das Fahrverhalten des Fahrzeugs verantwortlich sind.

Es wurde bereits vorgeschlagen, mit Reifensensoren Radkräfte zu messen und diese Radkräfte als Regelgrößen eines Regelkreises zu verwenden. Dabei werden die Sensorsignale der einzelnen Reifen unmittelbar in einem Radkraftregler umgerechnet und über die Regelung in Maßnahmen umgesetzt, welche am Fahrzeug angewendet werden können. Auf diese Weise ergibt sich eine kurze Verarbeitungszeit zwischen dem Erfassen der Istgrößen und dem Eingriff in das Fahrverhalten des Fahrzeugs.

Radkräfte können ebenfalls durch Radlagersensoren gemessen werden. Diese können beispielsweise so gestaltet sein, dass Mikrosensoren im rotierenden Teil des Radlagers eingebaut werden. Kräfte und Beschleunigungen sowie die Drehzahl können so durch die am beweglichen Teil des Radlagers angebrachten Mikrosensoren gemessen werden. Diese Daten können dann mit elektronisch abgespeicherten Grundmustern verglichen werden. Ebenfalls können zusätzliche Mikrosensoren im statischen Teil des Radlagers eingebaut werden. Die Daten dieser Mikrosensoren können als Vergleichswerte zur Beurteilung der Daten verwendet werden, die von den am beweglichen Teil des Radlagers angebrachten Sensoren gemessen werden. Die Mikrosensoren könnten beispielsweise in Form von Mikroschalter-Arrays realisiert sein, wobei bewegliche Biegebalkensysteme vorgesehen sind, die sich lateral gegen zwei oder mehrere mechanische Anschläge unter Krafteinfluss bewegen lassen.

Aus der DE 196 24 795 A1 ist ein Verfahren zur Regelung des Fahrverhaltens eines Fahrzeugs bekannt, wobei zur Ermittlung von auf die einzelnen Räder wirkenden Kräfte Reifensensoren eingesetzt sind. Es ist vorgesehen, dass die auf die Reifen wirkenden Kräfte die Regelgrößen eines Regelkreises bilden. Aus der DE 199 44 333 A1 ist eine Vorrichtung zur Regelung eines Giermoments eines vierrädrigen Fahrzeugs während einer Kurvenfahrt bekannt. Die Vorrichtung weist eine Regelschaltung, welche die Abweichung von gemessenen, am Reifen angreifenden Istquerkräften berechnet, und eine Aktivierungslogik auf, welche in bestimmten Fahrsituationen eine Regelung des durch die Istquerkräfte verursachten Giermoments hin zu einem durch sollquerkräfte bestimmten Giermoment veranlasst, wenn diese Abweichung mindestens einen Schwellenwert überschreitet. Dabei ist vorgesehen, dass das zu regelnde Giermoment bei übersteuerndem Fahrzeugverhalten aus den gemessenen Querkräften an den Hinterrädern, der berechneten Referenzkraft des Hinterrads in Abhängigkeit von Lenkradwinkel, Fahrzeugreferenzgeschwindigkeit, Reibwert sowie dem Abstand der Hinterachse vom Schwerpunkt bestimmt wird.

**Vorteile der Erfindung**

Die Erfindung behebt obenstehende Nachteile durch das Verfahren mit den Merkmalen des Anspruchs 1 und das System mit den Merkmalen des Anspruchs 11.

Das erfindungsgemäße Verfahren stellt daher eine Verbesserung der Fahrdynamikregelungen zur verfügung, die im Wesentlichen auf der Giergeschwindigkeit und dem Schwimmwinkel eines Fahrzeugs beruhen, da Kräfte beziehungsweise Momente als Regelgrößen verwendet werden. Es werden auch nicht mehr, wie beim oben geschilderten Stand der Technik, die Radkräfte der einzelnen Räder notwendig als Regelgrößen verwendet. Vielmehr werden Regelgrößen konzipiert, die aus den gemessenen Radkräften berechnet werden. Insofern steht ein flexibles Verfahren zur Verfügung, mit dem in vielfältiger Weise die Fahrdynamik eines Fahrzeugs verbessert werden kann. Erfindungsgemäß wird als Regelgröße die Seitenkraft im Schwerpunkt des Fahrzeugs verwendet. Die Seitenkraft im Schwerpunkt des Fahrzeugs ist bei einer Kurvenfahrt eine primäre Größe, die das Fahrverhalten des Fahrzeugs beeinflusst. Insofern ist sie geeignet, als Regelgröße im Sinne der vorliegenden Erfindung eingesetzt zu werden. Aus demselben Grund wird zusätzlich oder alternativ als Regelgröße das Drehmoment um die Hochachse des Fahrzeugs verwendet. Erfindungsgemäß ist vorgesehen, dass der Istwert der Seitenkraft nach der folgenden Gleichung bestimmt wird:

$$F_Y = (F_{Y1} + F_{Y2})\cos\delta + F_{Y3} + F_{Y4},$$

wobei:

$F_y$:  Istwert der Seitenkraft im Schwerpunkt des Fahrzeugs;
$F_{yi}$:  Am Rad i gemessene Radkraft
$\delta$:  Lenkwinkel an den Vorderrädern (i = 1,2).

Die als Regelgröße verwendete Seitenkraft lässt sich somit aus dem Lenkwinkel und den gemessenen Radkräften berechnen. Es ist ebenso vorgesehen, dass der Istwert des Drehmomentes um die Hochachse des Fahrzeugs nach der folgenden Gleichung bestimmt wird:

$$M_z = (F_{Y1} + F_{Y2})l_v\cos\delta - (F_{Y3} + F_{Y4})l_H + (F_{Y1} - F_{Y2})\frac{S_v}{2}\sin\delta,$$

wobei:

$F_y$:  Istwert der Seitenkraft im Schwerpunkt des Fahrzeugs;
$F_{yi}$:  Am Rad i gemessene Radkraft;
$\delta$:  Lenkwinkel an den Vorderrädern (i = 1,2);
$l_v$:  Abstand der Vorderräder (i = 1,2) vom Schwerpunkt;
$l_H$:  Abstand der Hinterräder (i = 3,4) vom Schwerpunkt;
$S_v$:  Spurweite an der Vorderachse (i = 1,2).

Der Istwert des Drehmomentes lässt sich also auch in übersichtlicher weise aus den Radkräften, den fahrzeugspezifischen Größen $l_v$, $l_H$ und $S_v$ sowie dem den Fahrerwunsch repräsentierenden Lenkwinkel berechnen.

Das Verfahren ist besonders vorteilhaft dadurch weitergebildet, dass die Sollwerte einen Wunsch des Fahrers nach Beibehaltung oder Änderung des aktuellen Fahrzustandes berücksichtigen. Derartige Fahrerwünsche können beispielsweise durch den Lenkradwinkel, den Bremsvordruck oder die Fahrpedalstellung repräsentiert sein. Für all diese Größen können Sensoren vorgesehen sein, deren Messergebnisse die Sollwerte zur Regelung des Fahrverhaltens beeinflussen.

Die Erfindung ist in besonders vorteilhafter weise dadurch weitergebildet, dass der Sollwert der Seitenkraft nach der folgenden Gleichung bestimmt wird:

$$F_{y,soll} = m \cdot \frac{v^2}{l} \delta \frac{1}{1+\left(\dfrac{v}{v_{CH}}\right)^2} \quad,$$

wobei:

$F_{y,soll}$:    Sollwert der Seitenkraft im Schwerpunkt des Fahrzeugs;
m:    Fahrzeugmasse;
v:    Fahrgeschwindigkeit;
l:    Radstand;
$\delta$:    Lenkwinkel an den Vorderrädern;
$V_{CH}$:    charakteristische Geschwindigkeit.

Der Sollwert der Seitenkraft ergibt sich demnach aus aktuellen Fahrbedingungen, die durch die Geschwindigkeit v repräsentiert sind, und aus fahrzeugspezifischen Parametern, nämlich der Masse m, dem Radstand 1 des Fahrzeugs und der charakteristischen Geschwindigkeit $V_{CH}$ (siehe M. Mitschke: Dynamik der Kraftfahrzeuge, Band C: Fahrverhalten, Spinger-Verlag Berlin, Heidelberg 1990). Ferner geht als entscheidende Größe der Lenkwinkel $\delta$ an den Vorderrädern in die Bestimmung des Sollwertes der Seitenkraft ein. Hierdurch wird der Fahrerwunsch repräsentiert. Die angegebene Seitenkraft ist letztlich das Produkt aus Fahrzeugmasse und Querbeschleunigung, wobei für diese Berechnung allerdings angenommen wird, dass der Schwimmwinkel klein ist. Außerdem muss das Zeitverhalten des Kraftaufbaus berücksichtigt werden, denn die Seitenkraft folgt dem Lenkwinkel mit einer von der Fahrzeuggeschwindigkeit abhängigen zeitlichen Verzögerung von beispielsweise 0,1 Sekunden.

Ebenfalls kann in vorteilhafter Weise vorgesehen sein, dass der Sollwert des Drehmomentes um die Hochachse des Fahrzeugs nach der folgenden Gleichung bestimmt wird:

$$M_{z,soll} = J_z \cdot \frac{v}{l} \dot{\delta} \frac{1}{1+\left(\dfrac{v}{v_{CH}}\right)^2} \quad,$$

wobei:

Mz,coll:    Sollwert, des Drehmomentes um die Hochachse des Fahrzeugs;
m:    Fahrzeugmasse;
v:    Fahrgeschwindigkeit;
l:    Radstand;
$\dot{\delta}$:    Lenkwinkelgeschwindigkeit an den Vorderrädern;
$V_{CH}$:    charakteristische Geschwindigkeit.

Das Drehmoment um die Hochachse des Fahrzeugs ist somit das Produkt des Trägheitsmomentes Jz mit der Sollgierbeschleunigung $\ddot{\psi}_{coll}$. Wiederum gehen neben dem Trägheitsmoment Jz die charakteristische Geschwindigkeit $v_{CH}$ und Radstand l des Fahrzeugs als fahrzeugspezifische Parameter ein.

Vorzugsweise erfolgt die Regelung über Bremseingriffe. Derartige Bremseingriffe werden auch im Rahmen von Fahrdynamikregelungen des Standes der Technik verwendet und können beispielsweise zur Regelung des Drehmomentes um die Hochachse genutzt werden.

Es kann aber auch nützlich sein, dass die Regelung über Lenkeingriffe erfolgt. Besonders vorteilhaft kann hierbei eine Einzelradlenkung eingesetzt werden.

Bei einer weiteren bevorzugten Variante des erfindungsgemäßen Verfahrens ist dieses dadurch weitergebildet, dass die Regelung durch Beeinflussung der Fahrgeschwindigkeit erfolgt. Liegt beispielsweise der ermittelte Istwert für die Seitenkraft unterhalb des Sollwertes, so kann die für den Fahrerwunsch erforderliche Seitekraft nicht mehr auf die Fahrbahn übertragen werden. Mit anderen Worten: Der Fahrerwunsch ist nicht mehr erfüllbar. Durch einen aktiven Bremseingriff kann somit die erforderliche seitenkraft verringert werden. Ebenfalls ist zusätzlich oder alternativ ein Eingriff über die Motorsteuerung möglich. Für den beschriebenen Fall eines unter dem Sollwert der Seitenkraft liegenden Istwert ist es auch möglich, die Regelung des Drehmomentes um die Hochachse zu verwenden.

Nützlicherweise kann weiterhin im Rahmen des erfindungsgemäßen Verfahrens vorgesehen sein, dass ein Schätzer verwendet wird, der aus ermittelten Eingangswerten Ausgangswerte erzeugt, die bei der Berechnung der Istwerte und/oder der Sollwerte berücksichtigt werden. Beispielsweise kann für die Bestimmung der Fahrzeuggeschwindigkeit ein Schätzer herangezogen werden. Die Ausgangswerte des Schätzers können ebenfalls für die Berechnung der Istwerte der Kräfte im Schwerpunkt und des Drehmomentes um die Hochachse aus den an den Rädern gemessenen Kräften verwendet werden. Der Schätzer kann ein Modell des zu regelnden Fahrzeugs enthalten und bestimmt mit Hilfe der am Fahrzeug gemessenen Größen weitere Zustandsgrößen. Eine Filterung der Messgrößen sowie eine Sensorüberwachung kann ebenfalls in dem Schätzer erfolgen.

Das erfindungsgemäße Verfahren kann in besonders vorteilhafter Weise so ausgeführt sein, dass die Kräfte an Rädern des Fahrzeugs durch Reifensensoren gemessen werden. Derartige Reifensensoren können so ausgelegt sein, dass in jedem Reifen magnetisierte Flächen beziehungsweise Streifen mit vorzugsweise in Umfangsrichtung verlaufenden Feldlinien eingearbeitet sind. Die Magnetisierung erfolgt beispielsweise abschnittsweise immer in gleicher Richtung, aber mit entgegengesetzter Orientierung, das heißt mit abwechselnder Polarität. Die magnetisierten Streifen verlaufen vorzugsweise in Felgenhornnähe und in Latschnähe. Die Messwertgeber rotieren daher mit Radgeschwindigkeit. Entsprechende Messwertaufnehmer sind vorzugsweise karosseriefest an zwei oder mehreren in Drehrichtung unterschiedlichen Punkten angebracht und haben zudem noch einen von der Drehachse unterschiedlichen radialen Abstand. Dadurch können ein inneres Messsignal und ein äußeres Messsignal erhalten werden. Eine Rotation des Reifens kann dann über die sich ändernde Polarität des Messsignals beziehungsweise der Messsignale in Umfangsrichtung erkannt werden. Aus dem Abrollumfang und der zeitlichen Änderung des inneren Messsignals und des äußeren Messsignals kann beispielsweise die Radgeschwindigkeit berechnet werden. Aus den durch die Verformung des Reifens resultierenden Phasenverschiebungen der Messsignale kann auf die einwirkenden Kräfte direkt geschlossen werden.

Es kann aber auch vorteilhaft sein, dass die Kräfte an den Rädern des Fahrzeugs durch Radlagersensoren gemessen werden. Diese können beispielsweise so gestaltet sein, dass Mikrosensoren im rotierenden Teil des Radlagers eingebaut werden. Kräfte und Beschleunigungen sowie die Drehzahl können dann durch die am beweglichen Teil des Radlagers angebrachten Mikrosensoren gemessen werden. Diese Daten können mit elektronisch abgespeicherten Grundmustern verglichen werden. Ebenfalls können zusätzliche Mikrosensoren im statischen Teil des Radlagers eingebaut werden. Die Daten dieser Mikrosensoren sind ebenfalls als Vergleichswerte zur Beurteilung der Daten verwendbar, die von den am beweglichen Teil des Radlagers angebrachten Sensoren gemessen werden. Die Mikrosensoren können beispielsweise in Form von Mikroschalter-Arrays realisiert sein, wobei bewegliche Biegebalkensysteme vorgesehen sind, die sich lateral gegen zwei oder mehrere mechanische Anschläge unter Krafteinfluss bewegen lassen.

Die Erfindung baut auf dem gattungsgemäßen System dadurch auf, dass die Regelgrößen Kräfte beziehungsweise Momente sind, dass aus den an den Rädern des Fahrzeugs gemessenen Kräften den Sollwerten zugeordnete Istwerte berechenbar sind und dass die ermittelten Sollwerte und die berechneten Istwerte als Eingangswerte einer Regelung verwendbar sind. Auf diese Weise setzt das erfindungsgemäße System die vorteile des erfindungsgemäßen Verfahrens um. Erfindungsgemäß ist vorgesehen, dass als Regelgröße die Seitenkraft im Schwerpunkt des Fahrzeugs verwendbar ist. Diese für eine Kurvenfahrt wichtige Größe lässt sich somit als Regelgröße im Sinne der vorliegenden Erfindung einsetzen. Es ist ebenfalls vorgesehen, dass zusätzlich oder alternativ als Regelgröße das Drehmoment um die Hochachse des Fahrzeugs verwendbar ist. Auch diese Größe ist insbesondere bei einer Kurvenfahrt wichtig. Es ist erfindungsgemäß vorgesehen, dass der Istwert der Seitenkraft nach der folgenden Gleichung bestimmt wird:

$$F_Y = (F_{Y1} + F_{Y2})\cos\delta + F_{Y3} + F_{Y4},$$

wobei:

$F_y$: Istwert der Seitenkraft im Schwerpunkt des Fahrzeugs;
$F_{yi}$: Am Rad i gemessene Radkraft
$\delta$: Lenkwinkel an den Vorderrädern (i = 1,2).

Die als Regelgröße verwendete Seitenkraft lässt sich somit aus dem Lenkwinkel und den gemessenen Radkräften berechnen. Es ist ebenso vorgesehen, dass der Istwert des Drehmomentes um die Hochachse des Fahrzeugs nach der folgenden Gleichung bestimmt wird:

$$M_z = (F_{y1} + F_{y2})\, l_V \cos\delta - (F_{y3} + F_{y4})\, l_H + (F_{y1} - F_{y2})\frac{S_v}{2}\sin\delta,$$

wobei:

$F_y$: Istwert der Seitenkraft im Schwerpunkt des Fahrzeugs;
$F_{yi}$: Am Rad i gemessene Radkraft;
$\delta$: Lenkwinkel an den Vorderrädern (i = 1,2);
$l_V$: Abstand der Vorderräder (i = 1,2) vom Schwerpunkt;
$l_H$: Abstand der Hinterräder (i = 3,4) vom Schwerpunkt;
$S_v$: Spurweite an der Vorderachse (i = 1,2).

Der Istwert des Drehmomentes lässt sich somit aus den Radkräften, den fahrzeugspezifischen Größen $l_V$, $l_H$ und $S_v$ sowie dem den Fahrerwunsch repräsentierenden Lenkwinkel berechnen.
Das erfindungsgemäße System ist in besonders vorteilhafter Weise dadurch weitergebildet, dass die Sollwerte einen Wunsch des Fahrers nach Beibehaltung oder Änderung des aktuellen Fahrzustandes berücksichtigen. Ein derartiger Fahrerwunsch kann beispielsweise durch die Einstellung eines Lenkwinkels repräsentiert sein.
Die Erfindung ist in besonders vorteilhafter Weise dadurch weitergebildet, dass der Sollwert der Seitenkraft nach der folgenden Gleichung bestimmt wird:

$$F_{y,soll} = m \cdot \frac{v^2}{l}\delta\,\frac{1}{1+\left(\dfrac{v}{v_{CH}}\right)^2}\,,$$

wobei:

$F_{y,soll}$: Sollwert der Seitenkraft im Schwerpunkt des Fahrzeugs;
m: Fahrzeugmasse;
v: Fahrgeschwindigkeit;
l: Radstand;
$\delta$: Lenkwinkel an den Vorderrädern;
$V_{CH}$: charakteristische Geschwindigkeit.

Der Sollwert der Seitenkraft ergibt sich demnach aus aktuellen Fahrbedingungen, fahrzeugspezifischen Parametern und Parametern, die den Fahrwunsch des Fahrers berücksichtigen. Bei der angegebenen Gleichung handelt es sich um eine Näherung, wobei angenommen wird, dass der Schwimmwinkel des Fahrzeugs klein ist. Ebenfalls muss noch eine Verzögerung berücksichtigt werden, da die Seitenkraft dem Lenkwinkel mit einer zeitlichen Verzögerung von beispielsweise von 0,1 Sekunden folgt.
Ebenfalls kann in vorteilhafter Weise vorgesehen sein, dass der Sollwert des Drehmomentes um die Hochachse des Fahrzeugs nach der folgenden Gleichung bestimmt wird:

$$M_{z,soll} = J_z \cdot \frac{v}{l}\dot\delta\,\frac{1}{1+\left(\dfrac{v}{v_{CH}}\right)^2}\,,$$

wobei:

Mz,coll: Sollwert des Drehmomentes um die Hochachse des Fahrzeugs;
m: Fahrzeugmasse;

v:          Fahrgeschwindigkeit;

l:           Radstand;

$\dot{\delta}$:          Lenkwinkelgeschwindigkeit an den Vorderrädern;

$v_{CH}$:        charakteristische Geschwindigkeit.

Das Drehmoment um die Hochachse des Fahrzeugs ist somit das Produkt des Trägheitsmomentes Jz mit der Sollgierbeschleunigung $\ddot{\psi}_{soll}$.

vorzugsweise erfolgt die Regelung über Bremseingriffe, ähnlich wie bei Fahrdynamikregelungen des Standes der Technik.

Es kann aber auch nützlich sein, dass die Regelung über Lenkeingriffe erfolgt. Besonders vorteilhaft kann hierbei eine Einzelradlenkung eingesetzt werden.

Bei einer weiteren bevorzugten Variante des erfindungsgemäßen Systems ist dieses dadurch weitergebildet, dass die Regelung durch Beeinflussung der Fahrgeschwindigkeit erfolgt. Durch einen aktiven Bremseingriff kann die Soll-Seitenkraft verringert werden, so dass die für den Fahrerwunsch erforderliche Seitenkraft den Sollwert erreicht. Ebenfalls ist zusätzlich oder alternativ ein Eingriff über die Motorsteuerung möglich. Für den beschriebenen Fall eines unter dem Sollwert der Seitenkraft liegenden Istwert ist es auch möglich, die Regelung des Drehmomentes um die Hochachse zu verwenden.

Nützlicherweise kann weiterhin im Rahmen des erfindungsgemäßen Systems vorgesehen sein, dass ein Schätzer verwendet wird, der aus ermittelten Eingangswerten Ausgangswerte erzeugt, die bei der Berechnung der Istwerte und/oder der Sollwerte berücksichtigt werden. Beispielsweise kann die Fahrzeuggeschwindigkeit mit Hilfe eines Schätzers bestimmt werden. Die Ausgangswerte des Schätzers können ebenfalls für die Berechnung der Istwerte der Kräfte im Schwerpunkt und des Drehmomentes um die Hochachse aus den an den Rädern gemessenen Kräften verwendet werden. Der Schätzer kann ein Modell des zu regelnden Fahrzeugs enthalten und bestimmt mit Hilfe der am Fahrzeug gemessenen Größen weitere Zustandsgrößen. Eine Filterung der Messgrößen sowie eine Sensorüberwachung kann ebenfalls in dem Schätzer erfolgen.

Das erfindungsgemäße System kann in besonders vorteilhafter Weise so ausgeführt sein, dass die Mittel zum Messen von Kräften an Rädern des Fahrzeugs Reifensensoren umfassen. Derartige Reifensensoren können mit abschnittsweiser Magnetisierung ausgelegt sein. Die magnetisierten Streifen verlaufen vorzugsweise in Felgenhornnähe und in Latschnähe. Die Messwertgeber rotieren daher mit Radgeschwindigkeit. Entsprechende Messwertaufnehmer sind vorzugsweise karosseriefest an zwei oder mehreren in Drehrichtung unterschiedlichen Punkten angebracht und haben zudem noch einen von der Drehachse unterschiedlichen radialen Abstand. Dadurch können ein inneres Messsignal und ein äußeres Messsignal erhalten werden. Eine Rotation des Reifens kann dann über die sich ändernde Polarität des Messsignals beziehungsweise der Messsignale in Umfangsrichtung erkannt werden. Aus dem Abrollumfang und der zeitlichen Änderung des inneren Messsignals und des äußeren Messsignals kann beispielsweise die Radgeschwindigkeit berechnet werden. Aus der durch die Verformung des Reifens resultierenden Phasenverschiebungen der Messsignale kann auf die einwirkenden Kräfte direkt geschlossen werden.

Es kann aber auch vorteilhaft sein, dass Mittel zum Messen von Kräften an Rädern des Fahrzeugs Radlagersensoren umfassen. Diese können beispielsweise so gestaltet sein, dass Mikrosensoren im rotierenden Teil des Radlagers eingebaut werden. Kräfte und Beschleunigungen sowie die Drehzahl können durch die am beweglichen Teil des Radlagers angebrachten Mikrosensoren gemessen werden. Diese Daten können dann mit elektronisch abgespeicherten Grundmustern verglichen werden.

Der Erfindung liegt die Erkenntnis zugrunde, dass es möglich ist, Kräfte beziehungsweise Momente statt der daraus ableitbaren Giergeschwindigkeit und des daraus ableitbaren Schwimmwinkels zur Regelung zu verwenden. Insbesondere können aus den Radkräften Werte ermittelt werden, die als Istwerte von auf den Schwerpunkt des Fahrzeugs bezogene Größen interpretiert werden können, so dass diese Größen als Regelgrößen dienen. Anstelle der voranstehend beispielhaft genannten Seitenkräfte und der genannten Momente um die Hochachse des Fahrzeugs können auch Kräfte in Längs- und Hochrichtung als Regelgrößen verwendet werden beziehungsweise Momente um andere Achsen.

**Zeichnungen**

Die Erfindung wird nun mit Bezug auf die begleitenden Zeichnungen anhand bevorzugter Ausführungsformen beispielhaft erläutert.

Dabei zeigt:

Figur 1      eine schematische Darstellung eines Fahrzeugs zur Erläuterung physikalischer Größen;

Figur 2      ein Blockdiagramm einer ersten Ausführungsform der Erfindung; und

Figur 3    ein Blockdiagramm einer zweiten Ausführungsform der Erfindung.

**Beschreibung der Ausführungsbeispiele**

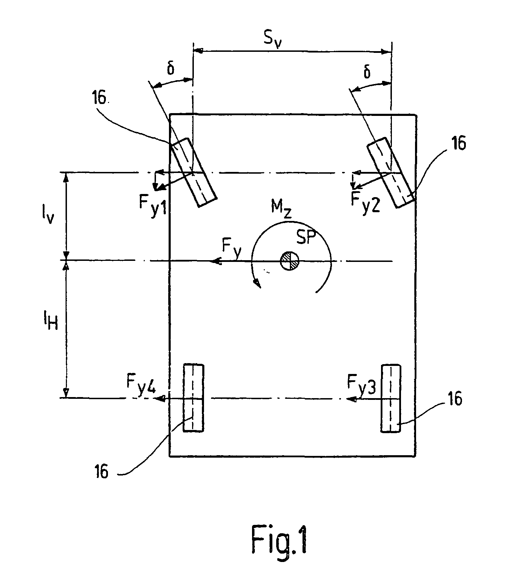

Figur 1 zeigt eine schematische Darstellung eines Fahrzeugs zur Erläuterung physikalischer Größen. Das Fahrzeug weist vier Räder 16 auf. Es wird angenommen, dass sich das Fahrzeug in einer Kurvenfahrt mit konstanter Geschwindigkeit ohne angreifende Längskräfte, das heißt ohne Beschleunigung und ohne Verzögerung, befindet. Für diesen Fahrzustand sind die folgenden physikalischen Größen zur Beschreibung geeignet:

| | |
|---|---|
| SP: | Schwerpunkt |
| $\delta$: | Lenkwinkel an den Vorderrädern 16 |
| $F_{y1}, ... F_{y4}$: | Seitenkräfte an den Rädern 16 |
| Fy: | Seitenkraft im Schwerpunkt SP des Fahrzeugs |
| $M_z$: | Moment um die Hochachse (z-Achse) des Fahrzeugs |
| $l_v, l_H$: | Längenangaben zur Lage des Schwerpunktes SP |
| $S_v$: | Spurweite an der Vorderachse. |

Bei einer Kurvenfahrt ergibt sich aus dem Fahrerwunsch mit dem Lenkwinkel $\delta$ sowie der Fahrgeschwindigkeit v die gewünschte Querbeschleunigung zu

$$a_{y,soll} \; = \; \frac{v^2}{l}\delta\frac{1}{1+\left(\dfrac{v}{v_{CH}}\right)^2} \;\; ,$$

wobei $l = l_v + l_H$ den Radstand und $V_{CH}$ die charakteristische Geschwindigkeit (M. Mitschke: Dynamik der Kraftfahrzeuge, Band C: Fahrverhalten, Spinger-Verlag Berlin, Heidelberg 1990) des Fahrzeugs bezeichnet. Ist der Schwimmwinkel klein, so ist die Seitenkraft $F_{y,soll}$ gleich der Zentripetalkraft $m \cdot a_{y,soll}$. Somit ist unter Berücksichtigung der Fahrzeugmasse m über

$$F_{y,soll} \; = \; m \; \cdot \; a_{y,soll}$$

der Sollwert für die Seitenkraft $F_y$ bekannt. Zur korrekten Bestimmung des Sollwertes für die Seitenkraft $F_{y,soll}$ muss zusätzlich das Zeitverhalten des Kraftaufbaus berücksichtigt werden. Im Allgemeinen folgt die Seitenkraft $F_y$ dem Lenkwinkel $\delta$ mit einer von der Fahrzeuggeschwindigkeit abhängigen zeitlichen Verzögerung von beispielsweise 0,1 Sekunden.

In vergleichbarer Weise lässt sich anhand von Figur 1 eine Sollgröße für das Drehmoment um die Hochachse des Fahrzeugs bestimmen. Zunächst ergibt sich aus der Änderung des Lenkwinkels die Sollgierbeschleunigung zu

$$\ddot{\psi}_{soll} \; = \; \frac{v}{l}\dot{\delta}\frac{1}{1+\left(\dfrac{v}{v_{CH}}\right)^2} \;\; .$$

Mit dem Trägheitsmoment $J_z$ kann somit das Solldrehmoment berechnet werden:

$$M_{z,soll} \; = \; J_z\ddot{\psi}_{soll} \;\; .$$

Damit sind die Sollgrößen für die Seitenkraft des Fahrzeugs im Schwerpunkt und für das Drehmoment um dessen Hochachse aus dem Fahrerwunsch abgeleitet. Basierend auf diesen Sollwerten sind unterschiedliche Regelkonzepte möglich.

Zunächst ist es möglich, eine Regelung der Seitenkraft $F_y$ und des Drehmomentes $M_z$ vorzunehmen. Ausgehend von den am Rad gemessenen Kräften $F_{y1}$, ..., $F_{y4}$ ergeben sich die Seitenkraft $F_y$ und das Drehmoment $M_z$ im Schwerpunkt zu

$$F_y = (F_{y1} + F_{y2})\cos\delta + F_{y3} + F_{y4},$$

$$M_z = (F_{y1} + F_{y2})l_v\cos\delta - (F_{y3} + F_{y4})l_H + (F_{y1} - F_{y2})\frac{S_v}{2}\sin\delta.$$

Solange die von den Reifen 16 aufgebrachte Seitenkraft $F_y$ gleich der Sollkraft $F_{y,soll}$ ist, ist die vom Fahrer gewünschte Querbeschleunigung realisierbar. Durch Regelung des Momentes $M_z$ auf den Sollwert wird verhindert, dass sich die Fahrzeuglängsachse aus der Fahrtrichtung herausdreht. Die Regelung des Drehmomentes $M_z$ erfolgt beispielsweise über Bremseingriffe an einzelnen Rädern, wie auch bei bisherigen Fahrdynamikregelungen, und/oder durch Lenkeingriffe. Besonders vorteilhaft kann hierbei eine Einzelradlenkung eingesetzt werden.

Weicht nun der berechnete Istwert der Seitenkraft $F_y$ von dem Sollwert der Seitenkraft $F_{y,soll}$ ab, so ist eine Korrektur erforderlich. Ist $F_y < F_{y,soll}$, so kann die für den Fahrerwunsch erforderliche Seitenkraft nicht mehr auf die Fahrbahn übertragen werden, das heißt der Fahrerwunsch ist nicht mehr erfüllbar. Es sind nun zwei Arten von Regeleingriffen möglich:

    1. Da der gewünschte Kurvenradius bei der gegebenen Geschwindigkeit nicht mehr gefahren werden kann, wird die Fahrzeuggeschwindigkeit durch einen aktiven Bremseingriff und/oder Eingriff in die Motorsteuerung reduziert und somit die erforderliche Seitenkraft verkleinert.

    2. Weiterhin kann durch die Regelung des Momentes $M_z$ das Fahrzeug stabilisiert werden. Diese Regelung des Momentes $M_z$ erfolgt in der gleichen Weise wie auch in dem Fall, wenn die Seitenkraft $F_y$ gleich der Sollkraft $F_{y,soll}$ ist.

Ein weiteres Regelkonzept beruht auf der Regelung der Radkräfte $F_{y1}$, ..., $F_{y4}$. Beispielsweise können mit Hilfe eines Modells des Fahrzeugs, das auch Angaben über die Art der Radaufhängung und der Federcharakteristik enthält, ausgehend von den Sollwerten $F_{y,soll}$ und $M_{z,soll}$ die Sollradseitenkräfte $F_{y1,soll}$, ..., $F_{y4,soll}$ berechnet und an den einzelnen Rädern eingeregelt werden.

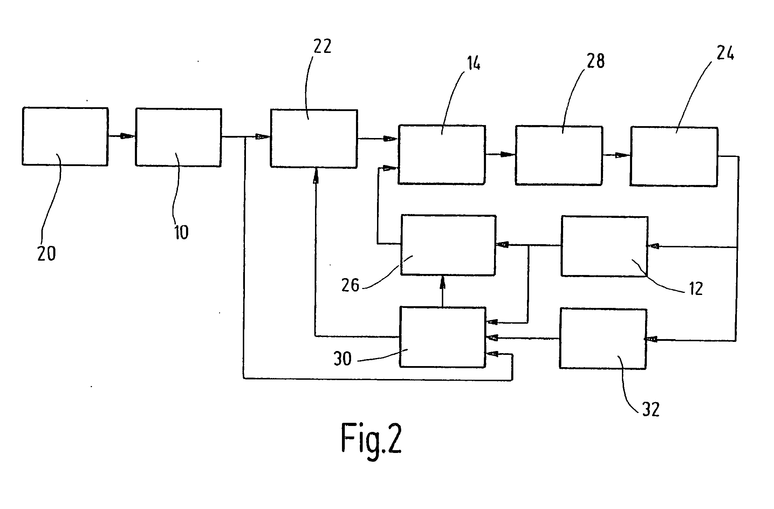

Figur 2 zeigt ein Blockdiagramm einer ersten Ausführungsform eines erfindungsgemäßen Systems. Der von einem Fahrer 20 geäußerte Fahrwunsch wird von Sensorn 10 erfasst. Dieser Fahrwunsch kann beispielsweise unter anderem von einem Lenkwinkel repräsentiert sein. Diese Sensoren erzeugen Sollwerte 22, beispielsweise eine Solllängskraft $F_{x,soll}$, eine Sollquerkraft $F_{y,soll}$, eine Sollhochkraft $F_{z,soll}$, ein Solldrehmoment um die Hochachse des Fahrzeugs $M_z$, etc. Es sind zahlreiche weitere Größen denkbar, bezüglich derer Sollwerte erzeugt werden können, beispielsweise auch ein Drehmoment um die Längsachse des Fahrzeugs, um ein Wankverhalten zu beeinflussen, beziehungsweise ein Drehmoment um eine Querachse des Fahrzeugs um bei Fahrzeugüberschlägen entsprechende Regelmechanismen ausführen zu können. Die Sollwerte werden einer Regelung 14 übergeben. Von Kraftsensoren 12 werden die einzelnen Radkräfte des Fahrzeugs 24 ermittelt. Diese einzelnen Kraftwerte $F_{xi}$, $F_{yi}$, $F_{zi}$, das heißt Kraftwerte der Einzelräder in sämtlichen Dimensionen, können in der Recheneinheit 26 in verschiedene Kräfte und Momente umgerechnet werden, beispielsweise in Längskräfte, Seitenkräfte, Hochkräfte und Drehmomente um die entsprechenden Achsen. Erfindungsgemäß werden die einzelnen Kraftwerte in eine Seitenkraft in einem Schwerpunkt des Fahrzeugs und/oder ein Drehmoment um eine Hochachse des Fahrzeugs umgerechnet. Die so ermittelten Istwerte dieser Größen werden ebenfalls der Regelung 14 eingegeben. In der Regelung werden nun gegebenenfalls Abweichungen der Sollwerte von den Istwerten bestimmt, und in Abhängigkeit davon werden Aktoren 28 aktiviert. Diese Aktoren 28 wirken auf das Fahrzeug 24 ein, beispielsweise durch Brems- und/oder Lenkeingriffe. Zur Ermittlung der Sollwerte ist weiterhin ein Schätzer 30 vorgesehen. Dieser erhält Eingangsdaten von weiteren Sensoren 32, die von den Kraftsensoren 12 ermittelten Daten und die von den den Fahrerwunsch bestimmenden Sensoren 10 ausgegebenen werte. Die Ausgangswerte des Schätzers 30 beeinflussen die Berechung der Istwerten der Regelgrößen in der Recheneinheit 26 sowie die Bestimmung der Sollwerte 22. Mit Hilfe des Schätzers 30 können beispielsweise Größen wie die Fahrzeuggeschwindigkeit herangezogen werden, wobei der Schätzer 30 ein Modell des zu regelnden Fahrzeugs enthalten kann. Ebenfalls kann der Schätzer 30 dazu geeignet sein, Messgrößen zu filtern und eine Sensorüberwachung vorzunehmen.

Zusätzlich zu den dargestellten Komponenten kann eine unterlagerte Regelung vorgesehen sein, die bei Einsatz eines aktiven Fahrwerks auch die Normalkräfte der einzelnen Räder beeinflusst. Hierdurch kann beispielsweise das Wanken reduziert werden, so dass letztlich höhere Seitenkräfte übertragen werden können.

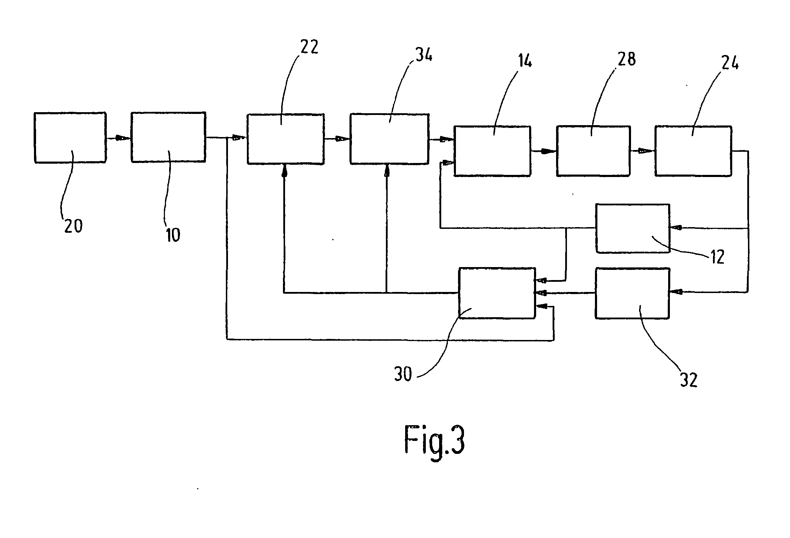

Figur 3 zeigt eine weitere Ausführungsform der vorliegenden Erfindung in Form eines Blockschaltbildes. Diese entspricht in weiten Teilen der Anordnung gemäß Figur 2, wobei gleiche Bezugszeichen gleiche oder vergleichbare Komponenten bezeichnen. Allerdings werden die ermittelten Sollwerte 22 zunächst in einer Recheneinheit 34 in Sollwerte anderer Größen umgerechnet, insbesondere in den Radkräften als Regelgröße zugeordnete Radsollkräfte. Die nachfolgende Regelung verwendet somit die einzelnen Radkräfte als Regelgrößen.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

**Patentansprüche**

1. Verfahren zur Regelung des Fahrverhaltens eines Fahrzeugs (24) mit den Schritten:

   - Ermitteln von Sollwerten, die bestimmten Regelgrößen zugeordnet sind, und
   - Messen von Kräften an Rädern (16) des Fahrzeugs (24), wobei
   - die Regelgrößen Kräfte beziehungsweise Momente sind,
   - aus den an den Rädern des Fahrzeugs (24) gemessenen Kräften den Sollwerten zugeordnete Istwerte berechnet werden, und
   - die ermittelten Sollwerte und die berechneten Istwerte als Eingangswerte einer Regelung (14) verwendet werden,

   **dadurch gekennzeichnet, dass**

   - als Regelgröße eine Seitenkraft in einem Schwerpunkt (SP) des Fahrzeugs (24) verwendet wird, wobei der Istwert der Seitenkraft nach der Gleichung

$$F_y = (F_{y1} + F_{y2})\, \cos\delta + F_{y3} + \bar{F}_{y4}$$

   bestimmt wird, und/oder
   als Regelgröße ein Drehmoment um eine Hochachse des Fahrzeugs (24) verwendet wird, wobei der Istwert des Drehmoments nach der Gleichung

$$M_z = (F_{y1} + F_{y2})\, l_v\, \cos\delta - (F_{y3} + F_{y4})\, l_H + (F_{y1} - F_{y2})\, S_v/2\, \sin\delta$$

   bestimmt wird, und wobei gilt:

   $F_y$: Istwert der Seitenkraft im Schwerpunkt des Fahrzeugs,
   $F_{yi}$: am Rad i gemessene Radkraft,
   $\delta$: Lenkwinkel an den Vorderrädern (i = 1,2),
   $l_v$: Abstand der Vorderräder (i = 1,2) vom Schwerpunkt,
   $l_H$: Abstand der Hinterräder (i = 3,4) vom Schwerpunkt,
   $S_v$: Spurweite an der Vorderachse (i = 1,2).

2. Verfahren nach Anspruch 1, **dadurch gekennzeichnet, dass** die Sollwerte einen Wunsch des Fahrers (20) nach Beibehaltung oder Änderung des aktuellen Fahrzustandes berücksichtigen.

3. Verfahren nach Anspruch 1 oder 2, **dadurch gekennzeichnet, dass** der Sollwert der Seitenkraft nach der folgenden Gleichung bestimmt wird:

$$F_{Y,soll} = m \cdot \frac{v^2}{l} \delta \frac{1}{1 + \left(\dfrac{v}{v_{CH}}\right)^2} \, ,$$

wobei,

$F_{y,soll}$: Sollwert der Seitenkraft im Schwerpunkt des Fahrzeugs;
m: Fahrzeugmasse;
v: Fahrgeschwindigkeit;
1 : Radstand;
$\delta$: Lenkwinkel an den Vorderrädern;
$v_{CH}$: charakteristische Geschwindigkeit.

4. Verfahren nach einem der vorangehenden Ansprüche, **dadurch gekennzeichnet, dass** der Sollwert des Drehmomentes um die Hochachse des Fahrzeugs (24) nach der folgenden Gleichung bestimmt wird:

$$M_{z,soll} = J_z \cdot \frac{v}{l} \dot{\delta} \frac{1}{1 + \left(\dfrac{v}{v_{CH}}\right)^2} \, ,$$

wobei:

$M_{z,coll}$: Sollwert des Drehmomentes um die Hochachse des Fahrzeugs;
m: Fahrzeugmasse;
v: Fahrgeschwindigkeit;
l: Radstand;
$\dot{\delta}$: Lenkwinkelgeschwindigkeit an den Vorderrädern;
$V_{CH}$: charakteristische Geschwindigkeit.

5. verfahren nach einem der vorangehenden Ansprüche, **dadurch gekennzeichnet, dass** die Regelung (14) über Bremseingriffe erfolgt.

6. Verfahren nach einem der vorangehenden Ansprüche, **dadurch gekennzeichnet, dass** die Regelung (14) über Lenkeingriffe erfolgt.

7. Verfahren nach einem der vorangehenden Ansprüche, **dadurch gekennzeichnet, dass** die Regelung (14) durch Beeinflussung der Fahrgeschwindigkeit erfolgt.

8. Verfahren nach einem der vorangehenden Ansprüche, **dadurch gekennzeichnet, dass** ein Schätzer (30) verwendet wird, der aus ermittelten Eingangswerten Ausgangswerte erzeugt, die bei der Berechnung der Istwerte und/ oder der Sollwerte berücksichtigt werden.

9. Verfahren nach einem der vorangehenden Ansprüche, **dadurch gekennzeichnet, dass** das Messen der Kräfte an den Rädern (16) des Fahrzeugs (24) durch Reifensensoren erfolgt.

10. verfahren nach einem der vorangehenden Ansprüche, dadurch gekennzeichet, dass das Messen der Kräfte an den Rädern (16) des Fahrzeugs (24) durch Radlagersensoren erfolgt.

**11.** System zur Regelung des Fahrverhaltens eines Fahrzeugs (24) mit

- Mitteln (10) zum Ermitteln von Sollwerten, die bestimmten Regelgrößen zugeordnet sind, und
- Mitteln (12) zum Messen von Kräften an Rädern (16) des Fahrzeugs (24), wobei
- die Regelgrößen Kräfte beziehungsweise Momente sind,
- aus den an den Rädern (16) des Fahrzeugs (24) gemessenen Kräften den Sollwerten zugeordnete Istwerte berechenbar sind, und
- die ermittelten Sollwerte und die berechneten Istwerte als Eingangsgrößen einer Regelung (14) verwendbar sind,

**dadurch gekennzeichnet, dass**

- als Regelgröße eine Seitenkraft in einem Schwerpunkt (SP) des Fahrzeugs (24) verwendbar ist, wobei der Istwert der Seitenkraft nach der Gleichung

$$F_y = (F_{y1} + F_{y2}) \cos\delta + F_{y3} + F_{y4}$$

bestimmt wird, und/oder
als Regelgröße ein Drehmoment um eine Hochachse des Fahrzeugs (24) verwendbar ist, wobei der Istwert des Drehmoments nach der Gleichung

$$M_z = (F_{y1} + F_{y2}) \, l_v \cos\delta - (F_{y3} + F_{y4}) \, l_H + (F_{y1} - F_{y2}) \, S_v/2 \sin\delta$$

bestimmt wird, und wobei gilt:

$F_y$: Istwert der Seitenkraft im Schwerpunkt des Fahrzeugs,
$F_{yi}$: am Rad i gemessene Radkraft,
$\delta$: Lenkwinkel an den Vorderrädern (i = 1,2),
$l_v$: Abstand der Vorderräder (i = 1,2) vom Schwerpunkt,
$l_H$ : Abstand der Hinterräder (i = 3,4) vom Schwerpunkt,
$S_v$: Spurweite an der Vorderachse (i = 1,2).

**12.** System nach Anspruch 11, **dadurch gekennzeichnet, dass** die Sollwerte einen Wunsch des Fahrers (20) nach Beibehaltung oder Änderung des aktuellen Fahrzustandes berücksichtigen.

**13.** System nach Anspruch 11 oder 12, **dadurch gekennzeichnet, dass** der Sollwert der Seitenkraft nach der folgenden Gleichung bestimmt wird:

$$F_{y,soll} = m \cdot \frac{v^2}{l} \delta \frac{1}{1 + \left(\dfrac{v}{v_{CH}}\right)^2} \quad ,$$

wobei,

$F_{y,soll}$: Sollwert der Seitenkraft im Schwerpunkt des Fahrzeugs;
m: Fahrzeugmasse;
v: Fahrgeschwindigkeit;
l: Radstand;

δ: Lenkwinkel an den Vorderrädern;
$v_{CH}$: charakteristische Geschwindigkeit.

**14.** System nach einem der Ansprüche 11 bis 13, **dadurch gekennzeichnet, dass** der Sollwert des Drehmomentes um die Hochachse des Fahrzeugs (24) nach der folgenden Gleichung bestimmt wird:

$$\text{Mz,soll} = J_z \cdot \frac{v}{l} \dot{\delta} \frac{1}{1 + \left( \frac{v}{v_{CH}} \right)^2} \quad ,$$

wobei:

$M_{z,coll}$: Sollwert des Drehmomentes um die Hochachse des Fahrzeugs;
m: Fahrzeugmasse;
v: Fahrgeschwindigkeit;
l: Radstand;
δ: Lenkwinkelgeschwindigkeit an den Vorderrädern;
$V_{CH}$: charakteristische Geschwindigkeit.

**15.** System nach einem der Ansprüche 11 bis 14, **dadurch gekennzeichnet, dass** die Regelung (14) über Bremseingriffe erfolgt.

**16.** System nach einem der Ansprüche 11 bis 15, **dadurch gekennzeichnet, dass** die Regelung (14) über Lenkeingriffe erfolgt.

**17.** System nach einem der Ansprüche 11 bis 16, **dadurch gekennzeichnet, dass** die Regelung (14) durch Beeinflussung der Fahrgeschwindigkeit erfolgt.

**18.** System nach einem der Ansprüche 11 bis 17, **dadurch gekennzeichnet, dass** ein Schätzer (30) vorgesehen ist, der aus ermittelten Eingangswerten Ausgangswerte erzeugt, die bei der Berechnung der Istwerte und/oder der Sollwerte berücksichtigt werden.

**19.** System nach einem der Ansprüche 11 bis 18, **dadurch gekennzeichnet, dass** die Mittel (12) zum Messen von Kräften an Rädern (16) des Fahrzeugs (24) Reifensensoren umfassen.

**20.** System nach einem der Ansprüche 11 bis 19, **dadurch gekennzeichnet, dass** die Mittel (12) zum Messen von Kräften an Rädern (16) des Fahrzeugs (24) Radlagersensoren umfassen.

**Claims**

**1.** Method for controlling the performance of a vehicle (24), having the steps:

- determination of setpoint values which are assigned to certain controlled variables, and
- measurement of forces at wheels (16) of the vehicle (24),
wherein
- the controlled variables are forces or torques,
- actual values which are assigned to the setpoint values are calculated from the forces measured at the wheels of the vehicle (24), and
- the setpoint values which are determined and the calculated actual values are used as input values of a control system (14),

**characterized in that**

- a lateral force at a centre of gravity (SP) of the vehicle (24) is used as a controlled variable, wherein the actual value of the lateral force is determined according to the equation

$$F_y = (F_{y1} + F_{y2}) \cos\delta + F_{y3} + F_{y4}$$

and/or

a torque about a vertical axis of the vehicle (24) is used as the controlled variable, wherein the actual value of torque is determined according to the equation

$$M_z = (F_{y1} + F_{y2}) \, l_v \, \cos\delta - (F_{y3} + F_{y4}) \, l_H + (F_{y1} - F_{y2}) \, S_v/2 \, \sin\delta$$

and wherein the following applies:

$F_y$: actual value of the lateral force at the centre of gravity of the vehicle,
$F_{yi}$: wheel force measured at the wheel i,
$\delta$: steering angle at the front wheels (i = 1, 2),
$l_v$: distance between the front wheels (i = 1, 2) and the centre of gravity,
$l_N$: distance between the rear wheels (i = 3, 4) and the centre of gravity, and
$S_y$: wheel track at the front axle (i = 1, 2).

2. Method according to Claim 1, **characterized in that** the setpoint values take into account a request by the driver (20) for the current driving state to be maintained or changed.

3. Method according to Claim 1 or 2, **characterized in that** the setpoint value of the lateral force is determined according to the following equation:

$$F_{y,setp} = m \cdot \frac{v^2}{l} \delta \frac{1}{1 + \left(\dfrac{v}{v_{CH}}\right)^2} \, ,$$

where

$F_{y,setp}$: setpoint value of the lateral force at the centre of gravity of the vehicles;
m: mass of vehicle;
v: velocity;
l: wheel base;
$\delta$: steering angle at the front wheels; and
$v_{CH}$: characteristic velocity.

4. Method according to one of the preceding claims, **characterized in that in that** the separate value of the torque about the vertical axis of the vehicle (24) is determined according to the following equation

$$M_{z,\text{setp}} \approx J_2 \cdot \frac{v}{l} \dot{\delta} \frac{1}{1+\left(\dfrac{v}{v_{CH}}\right)^2} \quad,$$

where:

$M_{z,setp}$: setpoint value of the torque about the vertical axis of the vehicle;
m: mass of vehicle;
v: velocity;
l: wheel base;
$\delta$: steering angle speed at the front wheels; and
$V_{CH}$: characteristic velocity.

5. Method according to one of the preceding claims, **characterized in that** the control (14) is carried out by means of braking interventions.

6. Method according to one of the preceding claims, **characterized in that** the control (14) is carried out by means of steering interventions.

7. Method according to one of the preceding claims, **characterized in that** the control (14) is carried out by influencing the velocity.

8. Method according to one of the preceding claims, **characterized in that** an estimator (30) is used which generates, from determined input values, output values which are taken into account in the calculation of the actual values and/or the setpoint values.

9. Method according to one of the preceding claims, **characterized in that** the measurement of the forces at the wheels (16) of the vehicle (24) is carried out by means of tyre sensors.

10. Method according to one of the preceding claims, **characterized in that** the measurement of the forces at the wheels (16) of the vehicle (24) is carried out by means of wheel bearing sensors.

11. A system for controlling the performance of a vehicle (24), having,

- means (10) for determining setpoint values which are assigned to certain control variables, and in that
- means (12) for measuring forces at wheels (16) of the vehicle (24), wherein
- the controlled variables are forces or torques,
- actual values which are assigned to the setpoint values can be calculated from the forces measured at the wheels (16) of the vehicle (24), and
- the setpoint values which are determined and the calculated actual values are used as input variables of a control (14),

**characterized in that**

- the lateral force at a centre of gravity (SP) of the vehicle (24) can be used as the controlled variable, wherein the actual value of the lateral forces is determined according to the equation.

$$F_y = (F_{y1} + F_{y2}) \cos\delta + F_{y3} + F_{y4}$$

and/or a torque about a vertical axis of the vehicle (24) is used as the controlled variable, wherein the actual value of the torque is determined according to the equation

$$M_z = (F_{y1} + F_{y2}) \, l_v \, \cos\delta - (F_{y3} + F_{y4}) \, l_H + (F_{y1} - F_{y2}) \, S_v/2 \, \sin\delta$$

and wherein the following applies:

$F_y$: actual value of the lateral force of the centre of gravity of the vehicle,
$F_{yi}$: wheel force measured at the wheel i,
$\delta$: steering angle at the front wheel (i = 1, 2),
$l_v$: distance between the front wheels (i = 1, 2), and the centre of gravity,
$l_x$: distance between the rear wheels (i = 3, 4), and the centre of gravity, and
$S_v$: track width at the front axle (i = 1, 2).

12. System according to Claim 11, **characterized in that** the setpoint values take into account a request by the driver (20) for the current driving state to be maintained or changed.

13. System according to Claim 11 or 12, **characterized in that** the setpoint values of the lateral force is determined according to the following equation:

$$F_{y,\text{setp}} = m \cdot \frac{v^2}{l} \delta \frac{1}{1 + \left(\dfrac{v}{v_{CH}}\right)^2} ,$$

where

$F_{y,\text{setp}}$: setpoint value of the lateral force at the centre of gravity of the vehicle;
m: mass of vehicle;
v: velocity;
l: wheel base
$\delta$: steering angle at the front wheels;
$V_{CH}$: characteristic velocity.

14. System according to Claim 11 or 13, **characterized in that** the setpoint values of the torque about the vertical axis of the vehicle (24) is determined according to the following equation:

$$M_{z,\text{setp}} = J_z \cdot \frac{v}{l} \dot{\delta} \frac{1}{1 + \left(\dfrac{v}{v_{CH}}\right)^2} ,$$

where:

$M_{z,\text{setp}}$: setpoint value of the torque about the vertical axis of the vehicle;
m: mass of vehicle;
v: velocity;

l: wheel base

δ: steering angle speed at the front wheels; and

$V_{CH}$: characteristic velocity.

**15.** System according to one of Claims 11 to 14, **characterized in that** the control (14) is carried out by means of braking interventions.

**16.** System according to one of Claims 11 to 15, **characterized in that** the control (14) is carried out by means of steering interventions.

**17.** System according to one of Claims 11 to 16, **characterized in that** the control (14) is carried out by influencing the velocity.

**18.** System according to one of Claims 11 to 17, **characterized in that** an estimator (30) is provided which generates, from determined input values, output values which are taken into account in the calculation of the actual values and/or of the setpoint values.

**19.** System according to one of Claims 11 to 18, **characterized in that** the means (12) for measuring forces at wheels (16) of the vehicle (24) comprise tyre sensors.

**20.** System according to one of Claims 11 to 19, **characterized in that** the means (12) for measuring forces at wheels (16) of the vehicle (24) comprise wheel bearing sensors.


**Revendications**

**1.** Procédé pour réguler le comportement de conduite d'un véhicule (24), comprenant les étapes suivantes :

- détermination de valeurs de consigne qui sont attribuées à certaines grandeurs de régulation et
- mesure de forces au niveau des roues (16) du véhicule (24), procédé selon lequel
- les grandeurs de régulation sont des forces ou des couples,
- les valeurs réelles associées aux valeurs de consigne sont calculées à partir des forces mesurées au niveau des roues du véhicule (24) et
- les valeurs de consigne déterminées et les valeurs réelles calculées sont utilisées comme valeurs d'entrée d'une régulation (14),

**caractérisé en ce que**
une grandeur de régulation utilisée est une force latérale en un centre de gravité (SP) du véhicule (24), la valeur réelle de la force latérale étant déterminée d'après l'équation

$$F_y = \left( \overline{F_{y1}} + \overline{F_{y2}} \right) cos\delta + F_{y3} + F_{y4}$$

et/ou
une grandeur de régulation utilisée est un couple autour d'un axe en hauteur du véhicule (24), la valeur réelle du couple étant déterminée d'après l'équation

$$M_z = \left( \overline{F_{y1}} + F_{y2} \right) l_v \, cos\delta - \left( F_{y3} + F_{y4} \right) l_H + \left( \overline{F_{y1}} - \overline{F_{y2}} \right) S_v / 2 \; sin\delta$$

et avec :

$F_y$ : valeur réelle de la force latérale au centre de gravité du véhicule,
$F_{yi}$ : force de roue mesurée au niveau de la roue i,
δ : angle de direction au niveau des roues avant (i = 1, 2),
$l_v$ = écart entre les roues avant (i = 1, 2) et le centre de gravité,

$l_H$ = écart entre les roues arrière (i = 3, 4) et le centre de gravité,
$S_v$ : écartement des roues au niveau de l'essieu avant (i = 1, 2).

**2.** Procédé selon la revendication 1, **caractérisé en ce que** les valeurs de consigne tiennent compte d'un souhait du conducteur (20) de conserver ou de modifier la situation de conduite actuelle.

**3.** Procédé selon la revendication 1 ou 2, **caractérisé en ce que** la valeur de consigne de la force latérale est déterminée conformément à l'équation ci-après :

$$F_{y,soll} = m \cdot \frac{v^2}{l} \; \bar{\delta} \; \frac{1}{1+\left(\frac{v}{v_{CH}}\right)^2},$$

avec

$F_{y,soll}$ : valeur de consigne de la force latérale au centre de gravité du véhicule ;
m : masse du véhicule ;
v : vitesse de déplacement ;
l : empattement ;
$\delta$ : angle de direction au niveau des roues avant ;
$V_{CH}$ : vitesse caractéristique.

**4.** Procédé selon l'une des revendications précédentes, **caractérisé en ce que** la valeur de consigne du couple autour de l'axe en hauteur du véhicule (24) est déterminée conformément à l'équation ci-après :

$$M_{z,soll} = J_z \cdot \frac{v}{l} \; \dot{\delta} \; \frac{1}{1+\left(\frac{v}{v_{CH}}\right)^2},$$

avec

$M_{z,soll}$ : valeur de consigne du couple autour de l'axe en hauteur du véhicule ;
m : masse du véhicule ;
v : vitesse de déplacement ;
l : empattement ;
$\delta$ : vitesse angulaire de direction au niveau des roues avant ;
$V_{CH}$ : vitesse caractéristique.

**5.** Procédé selon l'une des revendications précédentes, **caractérisé en ce que** la régulation (14) est réalisée par des interventions sur les freins.

**6.** Procédé selon l'une des revendications précédentes, **caractérisé en ce que** la régulation (14) est réalisée par des interventions sur la direction.

**7.** Procédé selon l'une des revendications précédentes, **caractérisé en ce que** la régulation (14) est réalisée en influençant la vitesse de déplacement.

**8.** Procédé selon l'une des revendications précédentes, **caractérisé en ce qu'**un évaluateur (30) est utilisé, lequel génère à partir des valeurs d'entrée déterminées des valeurs de sortie qui sont prises en compte lors du calcul des valeurs réelles et/ou des valeurs de consigne.

**9.** Procédé selon l'une des revendications précédentes, **caractérisé en ce que** la mesure des forces au niveau des roues (16) du véhicule (24) s'effectue par des capteurs de pneumatiques.

**10.** Procédé selon l'une des revendications précédentes, **caractérisé en ce que** la mesure des forces au niveau des roues (16) du véhicule (24) s'effectue par des capteurs de palier de roue.

**11.** Système pour réguler le comportement de conduite d'un véhicule (24), comprenant :

- des moyens (10) pour déterminer des valeurs de consigne qui sont attribuées à certaines grandeurs de régulation et
- des moyens (12) pour mesurer des forces au niveau des roues (16) du véhicule (24), système dans lequel
- les grandeurs de régulation sont des forces ou des couples,
- les valeurs réelles associées aux valeurs de consigne peuvent être calculées à partir des forces mesurées au niveau des roues (16) du véhicule (24) et
- les valeurs de consigne déterminées et les valeurs réelles calculées peuvent être utilisées comme valeurs d'entrée d'une régulation (14),

**caractérisé en ce que**
une grandeur de régulation pouvant être utilisée est une force latérale en un centre de gravité (SP) du véhicule (24), la valeur réelle de la force latérale étant déterminée d'après l'équation

$$F_y = (F_{y1} + F_{y2})cos\delta + F_{y3} + F_{y4}$$

et/ou
une grandeur de régulation pouvant être utilisée est un couple autour d'un axe en hauteur du véhicule (24), la valeur réelle du couple étant déterminée d'après l'équation

$$M_z = (F_{y1} + F_{y2})\, l_v\, cos\delta - (F_{y3} + F_{y4})l_H + (F_{y1} - F_{y2})S_v/2\ sin\delta$$

et avec :

$F_y$ : valeur réelle de la force latérale au centre de gravité du véhicule,
$F_{yi}$ : force de roue mesurée au niveau de la roue i,
$\delta$ : angle de direction au niveau des roues avant (i = 1, 2),
$l_v$ = écart entre les roues avant (i = 1, 2) et le centre de gravité,
$l_H$ = écart entre les roues arrière (i = 3, 4) et le centre de gravité,
$S_v$ : écartement des roues au niveau de l'essieu avant (i = 1, 2).

**12.** Système selon la revendication 11, **caractérisé en ce que** les valeurs de consigne tiennent compte d'un souhait du conducteur (20) de conserver ou de modifier la situation de conduite actuelle.

**13.** Système selon la revendication 11 ou 12, **caractérisé en ce que** la valeur de consigne de la force latérale est déterminée conformément à l'équation ci-après :

$$F_{y,soll} = m \cdot \frac{v^2}{l}\ \bar{\delta}\ \frac{1}{1 + \left(\frac{v}{v_{CH}}\right)^2},$$

avec

$F_{y,soll}$ : valeur de consigne de la force latérale au centre de gravité du véhicule ;
m : masse du véhicule ;
v : vitesse de déplacement ;
l : empattement ;
$\delta$ : angle de direction au niveau des roues avant ;
$V_{CH}$ : vitesse caractéristique.

**14.** Système selon l'une des revendications 11 à 13, **caractérisé en ce que** la valeur de consigne du couple autour de l'axe en hauteur du véhicule (24) est déterminée conformément à l'équation ci-après :

$$M_{z,soll} = J_z \cdot \frac{v}{l} \, \dot{\delta} \, \frac{1}{1+\left(\frac{v}{v_{CH}}\right)^2},$$

avec

M$_{z,soll}$ : valeur de consigne du couple autour de l'axe en hauteur du véhicule ;

m : masse du véhicule ;

v : vitesse de déplacement ;

l : empattement ;

δ : vitesse angulaire de direction au niveau des roues avant ;

V$_{CH}$ : vitesse caractéristique.

15. Système selon l'une des revendications 11 à 14, **caractérisé en ce que** la régulation (14) est réalisée par des interventions sur les freins.

16. Système selon l'une des revendications 11 à 15, **caractérisé en ce que** la régulation (14) est réalisée par des interventions sur la direction.

17. Système selon l'une des revendications 11 à 16, **caractérisé en ce que** la régulation (14) est réalisée en influençant la vitesse de déplacement.

18. Système selon l'une des revendications 11 à 17, **caractérisé en ce qu'**un évaluateur (30) est prévu, lequel génère à partir des valeurs d'entrée déterminées des valeurs de sortie qui sont prises en compte lors du calcul des valeurs réelles et/ou des valeurs de consigne.

19. Système selon l'une des revendications 11 à 18, **caractérisé en ce que** les moyens (12) pour mesurer des forces au niveau des roues (16) du véhicule (24) comprennent des capteurs de pneumatiques.

20. Système selon l'une des revendications 11 à 19, **caractérisé en ce que** les moyens (12) pour mesurer des forces au niveau des roues (16) du véhicule (24) comprennent des capteurs de palier de roue.

Fig.1

Fig.2

Fig.3

EP 1 387 787 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 19624795 A1

- DE 19944333 A1

### In der Beschreibung aufgeführte Nicht-Patentliteratur

- **M. MITSCHKE.** Dynamik der Kraftfahrzeuge. Springer-Verlag, 1990, vol. C